# EUROPEAN PATENT APPLICATION

(11) **EP 3 859 480 A1**
(43) Date of publication of application: **04.08.2021**
(21) Application number: 19926779.0
(22) Date of filing: 29.04.2019
(51) Int. Cl.: G05D 1/10, B64D 1/18

(54) **UNMANNED AERIAL VEHICLE CONTROL METHOD, DEVICE AND SPRAYING SYSTEM, AND UNMANNED AERIAL VEHICLE AND STORAGE MEDIUM**

(71) Applicant: SZ DJI Technology Co., Ltd., Shenzhen, Guangdong 518057 (CN)
(72) Inventor: ZHAO, Liyao, Shenzhen, Guangdong 518057 (CN)
(74) Representative: Appelt, Christian W.
(86) International application number: PCT/CN2019/084979
(87) International publication number: WO 2020/220195

(57) **Abstract**

Embodiments of the present invention provide a control method and device for an unmanned aerial vehicle, a spraying system, an unmanned aerial vehicle, and a storage medium. The method includes: obtaining location information and attitude information of an unmanned aerial vehicle; determining a spraying area of each nozzle in a target area based on the location information of the unmanned aerial vehicle and the attitude information of the unmanned aerial vehicle; determining whether there are crops in the spraying area corresponding to each nozzle; and when it is determined that there are crops in the spraying area of the nozzle, controlling the nozzle to be ON, otherwise controlling the nozzle to be OFF. In the embodiments of the present invention, the spraying area of each nozzle in the target area is determined based on the location information of the unmanned aerial vehicle and the attitude information of the unmanned aerial vehicle; further, whether there are crops in the spraying area corresponding to each nozzle is determined; and if there are crops in the spraying area of the nozzle, the nozzle is controlled to be ON, otherwise, the nozzle is controlled to be OFF. Waste of pesticide can be effectively avoided, in comparison with an operation mode of turning on all nozzles of an unmanned aerial vehicle and simultaneously spraying.

## Description

### TECHNICAL FIELD

Embodiments of the present invention relate to the field of unmanned aerial vehicles, and in particular, to a method and a device for controlling an unmanned aerial vehicle, a spraying system, an unmanned aerial vehicle, and a storage medium.

### BACKGROUND

In the prior art, an unmanned aerial vehicle, for example, an agricultural unmanned aerial vehicle, may be used for spraying operations. For example, a plurality of nozzles and a tank for carrying pesticides are disposed on the agricultural unmanned aerial vehicle. When there are crops below the agricultural unmanned aerial vehicle, the agricultural unmanned aerial vehicle turns on all nozzles and controls the plurality of nozzles to simultaneously spray pesticide down.

However, the spraying manner in the prior art causes a great waste of pesticide.

### SUMMARY OF INVENTION

Embodiments of the present invention provide a method and a device for controlling an unmanned aerial vehicle, a spraying system, an unmanned aerial vehicle, and a storage medium, to avoid great waste of pesticide when the unmanned aerial vehicle is performing a spraying task.

A first aspect of embodiments of the present invention provides a method for controlling an unmanned aerial vehicle. A plurality of nozzles are disposed on the unmanned aerial vehicle, and the nozzles are configured to perform a spraying task on crops in a target area. The method comprises: obtaining location information and attitude information of the unmanned aerial vehicle; determining a spraying area of each nozzle in the target area based on the location information of the unmanned aerial vehicle and the attitude information of the unmanned aerial vehicle; determining whether there are crops in the spraying area corresponding to each nozzle; upon determining that there are crops in the spraying area of the nozzle, controlling the nozzle to be ON, otherwise, controlling the nozzle to be OFF.

A second aspect of embodiments of the present invention provides a device for control an unmanned aerial vehicle. A plurality of nozzles are disposed on the unmanned aerial vehicle, and the nozzles are configured to perform a spraying task on crops in a target area. The control device comprises a memory and a processor, the memory is configured to store program code, and the processor is configured to invoke the program code and perform the following operations when the program code is executed: obtaining location information and attitude information of the unmanned aerial vehicle, determining a spraying area of each nozzle in the target area based on the location information of the unmanned aerial vehicle and the attitude information of the unmanned aerial vehicle, determining whether there are crops in the spraying area corresponding to each nozzle, upon determining that there are crops in the spraying area of the nozzle, controlling the nozzle to be ON, otherwise controlling the nozzle to be OFF.

A third aspect of embodiments of the present invention provides a spraying system of an unmanned aerial vehicle. The unmanned aerial vehicle performs a spraying task on crops in a target area. The spraying system of the unmanned aerial vehicle comprises: a plurality of nozzles, mounted on a fuselage of the unmanned aerial vehicle; a nozzle control system, configured to control the plurality of nozzles to be ON or OFF, and the control device according to the second aspect.

A fourth aspect of embodiments of the present invention provides an unmanned aerial vehicle. The unmanned aerial vehicle comprises: a fuselage; a power system, mounted in the fuselage and configured to supply power for flying; and the spraying system of the unmanned aerial vehicle according to the third aspect.

A fifth aspect of embodiments of the present invention provides a computer-readable storage medium. The computer-readable storage medium stores a computer program, and the computer program is executed by a processor to implement the method according to the first aspect.

In the control method and device for an unmanned aerial vehicle, the spraying system, the unmanned aerial vehicle, and the storage medium provided by the embodiments, by determining the spraying area of each nozzle in the target area based on the location information of the unmanned aerial vehicle and the attitude information of the unmanned aerial vehicle and further determining whether there are crops in the spraying area corresponding to each nozzle, which nozzle corresponds to a spraying area with crops and which nozzle corresponds to a spraying area without crops can be determined; and if there are crops in the spraying area of a nozzle, the nozzle is controlled to be ON, otherwise, the nozzle is controlled to be OFF. Therefore, waste of pesticide can be effectively avoided in comparison with an operation mode of turning on all nozzles of an unmanned aerial vehicle to spray simultaneously.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show some embodiments of the present invention, and persons of ordinary skill in the art may still derive other drawings from these accompanying drawings without creative efforts.
FIG. 1 is a flowchart of a method for controlling an unmanned aerial vehicle according to an embodiment of the present invention;
FIG. 2 is a schematic diagram of a spraying area of a nozzle in a target area according to an embodiment of the present invention;
FIG. 3 is another schematic diagram of a spraying area of a nozzle in a target area according to an embodiment of the present invention;
FIG. 4 is still another schematic diagram of a spraying area of a nozzle in a target area according to an embodiment of the present invention;
FIG. 5 is yet another schematic diagram of a spraying area of a nozzle in a target area according to an embodiment of the present invention;
FIG. 6 is yet another schematic diagram of a spraying area of a nozzle in a target area according to an embodiment of the present invention;
FIG. 7 is a flowchart of a method for controlling an unmanned aerial vehicle according to another embodiment of the present invention;
FIG. 8 is a flowchart of a method for controlling an unmanned aerial vehicle according to another embodiment of the present invention;
FIG. 9 is a schematic diagram of grid areas and a plurality of unit areas according to another embodiment of the present invention;
FIG. 10 is a structural diagram of a control device for an unmanned aerial vehicle according to an embodiment of the present invention;
FIG. 11 is a structural diagram of an unmanned aerial vehicle according to an embodiment of the present invention.

### Reference numerals:

21: unmanned aerial vehicle; 22: nozzle; 23: target area;
24: spraying area; 30: circle; 31: outer-tangent rectangular area;
41: circular area; 42: nozzle; 43: nozzle;
44: nozzle; 51: circle; 412: gridded area;
413: gridded area; 414: gridded area; 415: gridded area;
60: outer-tangent rectangular area; 62: circular area; 63: circular area;
64: circular area; 65: circular area; 81: grid area;
82: grid area; 83: grid area; 84: grid area;
85: grid area; 86: grid area; 87: grid area;
88: grid area; 89: grid area; 821: unit area;
822: unit area; 100: control device; 101: memory;
102: processor; 103: communication interface; 110: unmanned aerial vehicle;
107: motor; 106: propeller; 117: electronic speed governor;
118: flight controller.

### DETAILED DESCRIPTION OF THE EMBODIMENTS

The following clearly describes the technical solutions in the embodiments of the present invention with reference to the accompanying drawings in the embodiments of the present invention. Apparently, the described embodiments are merely some but not all of the embodiments of the present invention. All other embodiments obtained by persons of ordinary skill in the art based on the embodiments of the present invention without creative efforts shall fall within the protection scope of the present invention.

It should be noted that when a component is described as "fixed" to another component, the component may be directly located on another component, or an intermediate component may exist therebetween. When a component is considered as "connected" to another component, the component may be directly connected to another element, or an intermediate element may exist therebetween.

Unless otherwise defined, meanings of all technical and scientific terms used in the specification are the same as those generally understood by persons skilled in the art of the present invention. The terms used in the specification of the present invention herein are used only to describe specific embodiments, and not intended to limit the present invention. The term "and/or" used in this specification includes any or all possible combinations of one or more associated listed items.

The following describes in detail some implementations of the present invention with reference to the accompanying drawings. Under a condition that no conflict occurs, the following embodiments and features in the embodiments may be mutually combined.

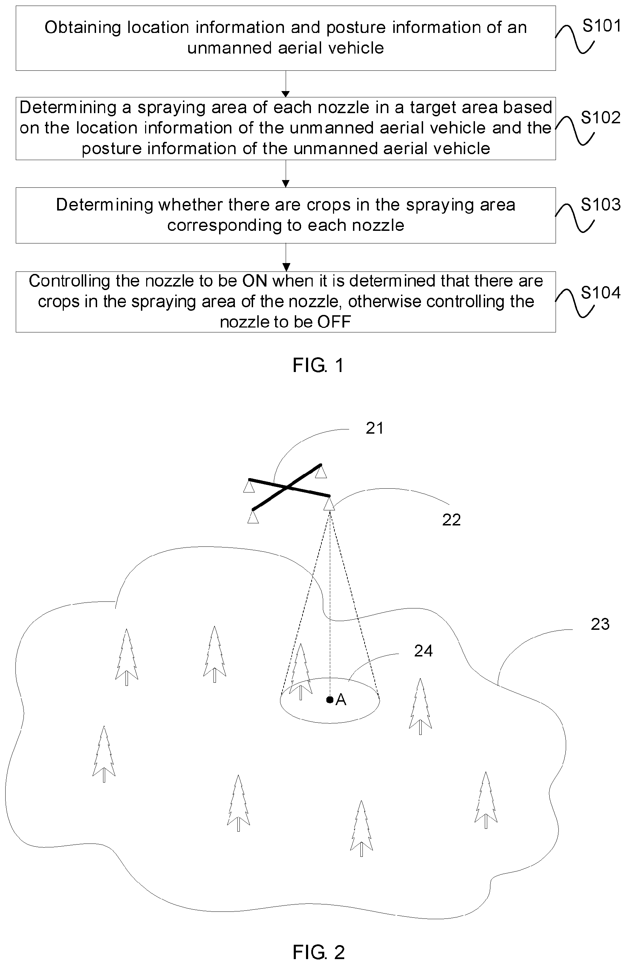

An embodiment of the present invention provides a method for controlling an unmanned aerial vehicle. FIG. 1 is a flowchart of a method for controlling an unmanned aerial vehicle according to an embodiment of the present invention. In this embodiment, a plurality of nozzles are disposed on the unmanned aerial vehicle, and the nozzles are configured to perform a spraying task on crops in a target area. As shown in FIG. 2, a plurality of nozzles 22 are disposed on an unmanned aerial vehicle 21. Herein, the number of the nozzles is not limited, and a mounting position of each nozzle on the unmanned aerial vehicle 21 is not limited either. Optionally, the unmanned aerial vehicle 21 is specifically an agricultural unmanned aerial vehicle. Four groups of nozzles are disposed on the unmanned aerial vehicle 21, and each group of nozzles includes two nozzles. The nozzles on the unmanned aerial vehicle 21 are configured to perform a spraying task on crops in a target area 23. In this embodiment, types of crops are not limited. For example, the crops may be fruit trees or vegetation. As shown in FIG. 1, the method in this embodiment may include the following steps.

Step S101: obtaining location information and attitude information of the unmanned aerial vehicle.

In this embodiment, a positioning system and an attitude sensor (for example, an inertial measurement unit (IMU)) may be disposed on the unmanned aerial vehicle 21, where the positioning system may be configured to determine the location information of the unmanned aerial vehicle 21, and the IMU may be configured to detect the attitude information of the unmanned aerial vehicle 21. A control device for the unmanned aerial vehicle 21 may obtain the location information of the unmanned aerial vehicle 21 by using the positioning system, and obtain the attitude information of the unmanned aerial vehicle 21 by using the IMU. The positioning system may include a satellite positioning receiver, for example, a GPS receiver, an RTK positioning receiver, or a BeiDou receiver. In this embodiment, the control device for the unmanned aerial vehicle 21 may be a control device disposed on the unmanned aerial vehicle 21. For example, the control device may be a flight controller of the unmanned aerial vehicle 21, or may be another general-purpose or dedicated controller or processor on the unmanned aerial vehicle 21. In other embodiments, the control device for the unmanned aerial vehicle 21 may be a ground control terminal corresponding to the unmanned aerial vehicle 21, for example, a remote control, a smartphone, a tablet computer, a notebook computer, or a head-mounted device.

Step S102: determining a spraying area of each nozzle in the target area based on the location information of the unmanned aerial vehicle and the attitude information of the unmanned aerial vehicle.

After obtaining the location information and attitude information of the unmanned aerial vehicle 21, the control device for the unmanned aerial vehicle 21 may determine a spraying area of each nozzle in the target area 23 based on the location information and the attitude information of the unmanned aerial vehicle 21.

In a feasible implementation, the determining of the spraying area of each nozzle in the target area based on the location information of the unmanned aerial vehicle and the attitude information of the unmanned aerial vehicle includes: determining location information of each nozzle based on the location information of the unmanned aerial vehicle and the attitude information of the unmanned aerial vehicle; and determining the spraying area of each nozzle in the target area based on the location information of each nozzle and a spraying width of each nozzle.

For example, the location information of the unmanned aerial vehicle 21 may be a coordinate position of the unmanned aerial vehicle 21 in a three-dimensional space, and the control device for the unmanned aerial vehicle 21 may determine location information of each nozzle based on the coordinate position of the unmanned aerial vehicle 21 in the three-dimensional space, the attitude information of the unmanned aerial vehicle 21, and the mounting position of each nozzle on the unmanned aerial vehicle 21, where the location information of each nozzle may be specifically a coordinate position of each nozzle in the three-dimensional space. Further, the control device determines a spraying area of each nozzle in the target area 23 based on the coordinate position of each nozzle in the three-dimensional space and the spraying width of each nozzle. The spraying width of each nozzle may be fixed. For example, the spraying width of each nozzle may be fixed in the control device for the unmanned aerial vehicle 21. Alternatively, the spraying width of each nozzle may be adjustable. Specifically, the spraying width of each nozzle may be adjusted based on a control instruction of a user. For example, the user may set the spraying width of each nozzle by using the ground control terminal. The ground control terminal generates a control instruction based on the settings of the user, and sends the control instruction to the unmanned aerial vehicle, and the unmanned aerial vehicle adjusts the spraying width of each nozzle based on the control instruction. Alternatively, the spraying width of each nozzle may be adjusted based on a flight height of the unmanned aerial vehicle. For example, when the flight height of the unmanned aerial vehicle is lower than a preset height, the spraying width of each nozzle is reduced; or when the flight height of the unmanned aerial vehicle is higher than a preset height, the spraying width of each nozzle is increased. When determining the spraying area of each nozzle in the target area, the control device for the unmanned aerial vehicle 21 may determine a projected point of each nozzle in the target area based on the location information of each nozzle, and determine the spraying area of each nozzle in the target area by using the projected point of each nozzle in the target area as an origin and using the spraying width of each nozzle as a spraying radius. Herein, the spraying area is circular. The circular spraying area is merely used as an example of the spraying area in this embodiment, and does not constitute a limitation on this embodiment. Other existing spraying areas or spraying areas that may appear in the future may all be applicable to this embodiment.

As shown in FIG. 2, a point A indicates a projected point of a nozzle 22 in the target area 23, and 24 indicates a spraying area of the nozzle 22 in the target area 23. Methods for determining spraying areas of other nozzles are similar to this, and are not described one by one herein.

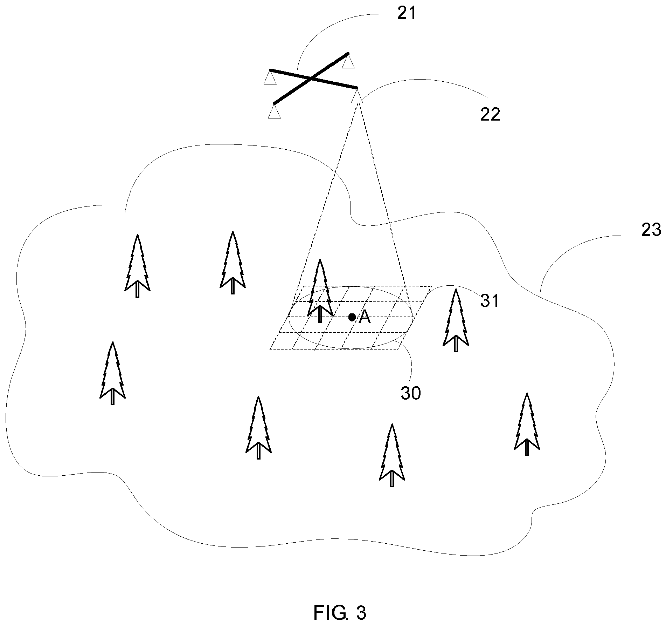

In other embodiments, the spraying area of each nozzle in the target area 23 may also be a gridded area. As shown in FIG. 3, 30 indicates a circle taking a projected point A of a nozzle 22 in the target area 23 as a center and taking a spraying width of the nozzle 22 as a radius. An outer-tangent rectangular area 31 and a plurality of grid areas in the outer-tangent rectangular area 31 are obtained by performing gridding processing on the circle 30, that is, the outer-tangent rectangular area 31 is a gridded area. Herein, the outer-tangent rectangular area 31 may be used as a spraying area of the nozzle 22 in the target area 23. Methods for determining spraying areas of other nozzles are similar to this and are not described one by one herein.

In another feasible implementation, the determining of the spraying area of each nozzle in the target area based on the location information of the unmanned aerial vehicle and the attitude information of the unmanned aerial vehicle includes: determining a spraying range of the unmanned aerial vehicle in the target area based on the location information of the unmanned aerial vehicle and a spraying width of the unmanned aerial vehicle; and determining, from the spraying range of the unmanned aerial vehicle in the target area, the spraying area of each nozzle in the target area based on the attitude information of the unmanned aerial vehicle.

For example, the location information of the unmanned aerial vehicle 21 may be the coordinate position of the unmanned aerial vehicle 21 in the three-dimensional space, and a spraying range of the unmanned aerial vehicle 21 in the target area 23 may be determined based on the coordinate position of the unmanned aerial vehicle 21 in the three-dimensional space and the spraying width of the unmanned aerial vehicle 21.

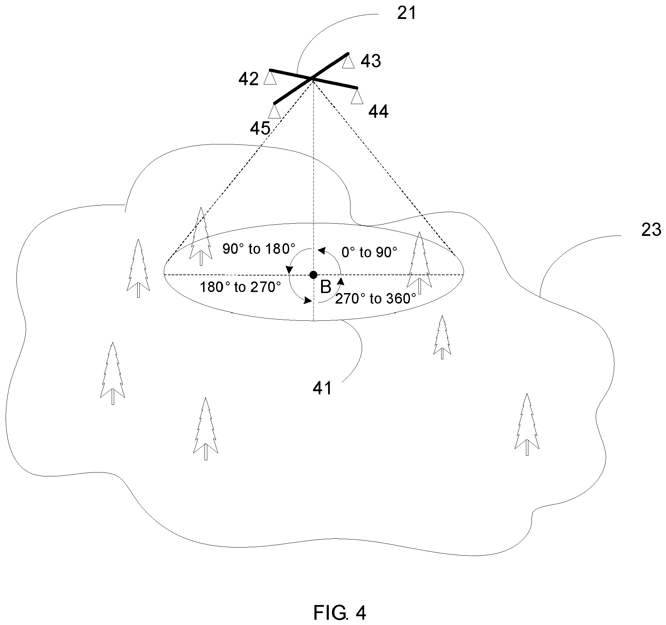

As shown in FIG. 4, the coordinate position of the unmanned aerial vehicle 21 in the three-dimensional space may be specifically a coordinate position of a central point of the unmanned aerial vehicle 21 in the three-dimensional space. The control device for the unmanned aerial vehicle 21 may determine a projected point of the central point of the unmanned aerial vehicle 21 in the target area 23 based on the coordinate position of the central point of the unmanned aerial vehicle 21 in the three-dimensional space. For example, the projected point is a point B. A circular area 41 taking the point B as a center and taking the spraying width of the unmanned aerial vehicle 21 as a radius may be specifically a spraying range of the unmanned aerial vehicle 21 in the target area 23. Likewise, the spraying width of the unmanned aerial vehicle 21 may be fixed or adjustable. Specifically, this is the same as the spraying width of the nozzle and is not described again herein. In addition, a shape of the spraying range of the unmanned aerial vehicle 21 in the target area 23 is not limited in this embodiment. FIG. 4 is merely an example for description. In other embodiments, the shape of the spraying range of the unmanned aerial vehicle 21 in the target area 23 may also be a shape different from a circle. Further, the control device may determine, from the spraying range, the spraying area corresponding to each nozzle based on the spraying range of the unmanned aerial vehicle 21 in the target area 23 and the attitude information of the unmanned aerial vehicle 21.

As shown in FIG. 4, four nozzles, i.e., a nozzle 42, a nozzle 43, a nozzle 44, and a nozzle 45, are disposed on the unmanned aerial vehicle 21. The control device may determine, in a spraying range 41, a spraying area corresponding to each nozzle based on the attitude information of the unmanned aerial vehicle 21 and the mounting position of each nozzle on the unmanned aerial vehicle 21. For example, a spraying area corresponding to the nozzle 43 in the spraying range 41 is a sectoral area in a range from 0° to 90° in the spraying range 41, a spraying area corresponding to the nozzle 42 in the spraying range 41 is a sectoral area in a range from 90° to 180° in the spraying range 41, a spraying area corresponding to the nozzle 45 in the spraying range 41 is a sectoral area in a range from 180° to 270° in the spraying range 41, and a spraying area corresponding to the nozzle 44 in the spraying range 41 is a sectoral area in a range from 270° to 360° in the spraying range 41.

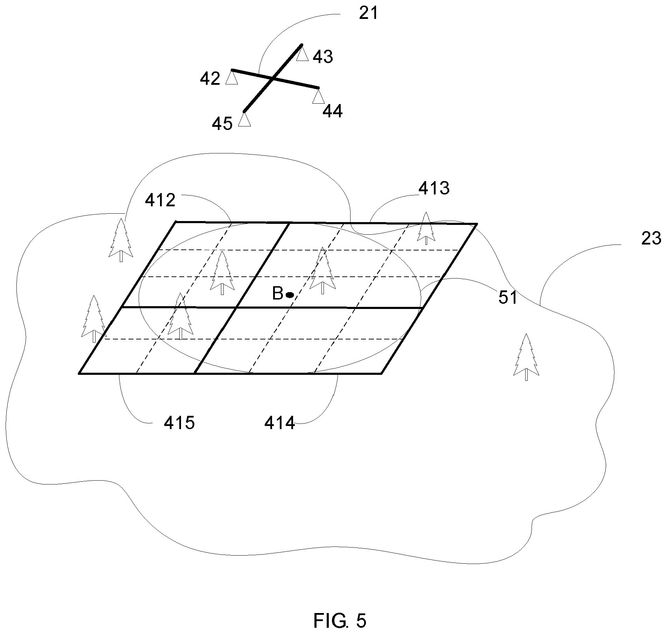

In other embodiments, the spraying area of each nozzle in the target area 23 may also be a gridded area. As shown in FIG. 5, 51 indicates a circle taking a projected point B of the unmanned aerial vehicle 21 in the target area 23 as a center and taking the spraying width of the unmanned aerial vehicle 21 as a radius. An outer-tangent rectangular area and a plurality of grid areas in the outer-tangent rectangular area are obtained by performing gridding processing on the circle 51. Herein, the outer-tangent rectangular area may be used as a spraying range of the unmanned aerial vehicle 21 in the target area 23. Further, a spraying area corresponding to each nozzle in the spraying range is determined based on the attitude information of the unmanned aerial vehicle 21 and the mounting position of each nozzle on the unmanned aerial vehicle 21. For example, a spraying area corresponding to the nozzle 43 in the spraying range is a gridded area 413, a spraying area corresponding to the nozzle 42 in the spraying range is a gridded area 412, a spraying area corresponding to the nozzle 45 in the spraying range is a gridded area 415, and a spraying area corresponding to the nozzle 44 in the spraying range is a gridded area 414. As shown in FIG. 5, each of the gridded area 412 to the gridded area 415 includes a plurality of grid areas, where the grid areas are grids indicated by dashed lines shown in FIG. 5. Each of the gridded area 412 to the gridded area 415 is an area indicated by solid lines and including a plurality of grid areas.

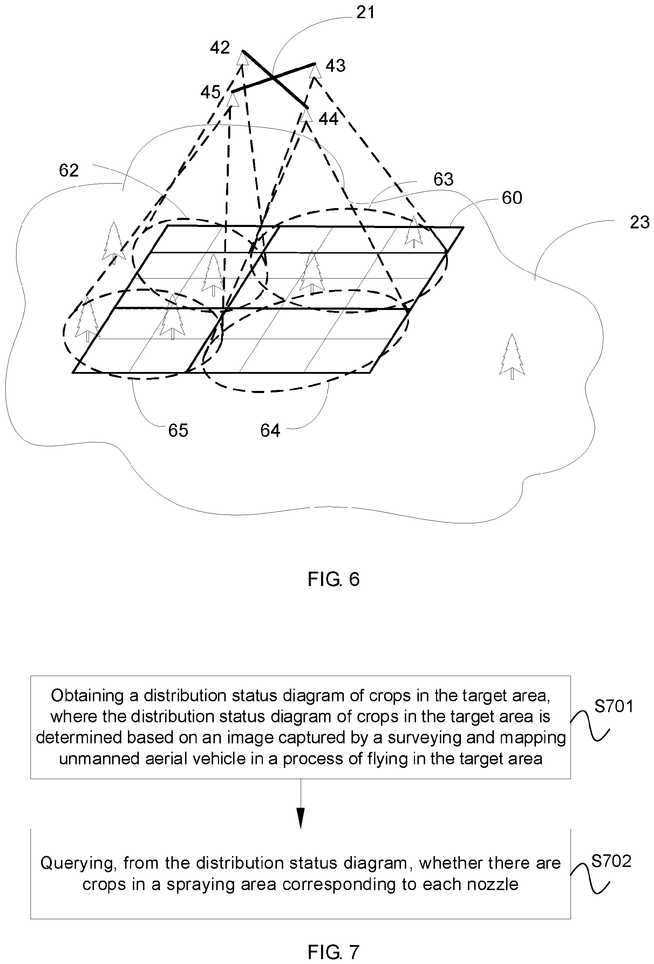

In other embodiments, the spraying area of each nozzle in the target area 23 may also be a circular area, and the spraying area includes a plurality of grid areas. As shown in FIG. 6, 60 indicates an outer-tangent rectangular area of a circle taking the projected point of the unmanned aerial vehicle 21 in the target area 23 as a center and taking the spraying width of the unmanned aerial vehicle 21 as a radius. A plurality of grid areas corresponding to the outer-tangent rectangular area 60 may be obtained by performing gridding processing on the outer-tangent rectangular area 60. Herein, the outer-tangent rectangular area 60 may be used as a spraying range of the unmanned aerial vehicle 21 in the target area 23. Further, a spraying area corresponding to each nozzle in the spraying range is determined based on the attitude information of the unmanned aerial vehicle 21 and the mounting position of each nozzle on the unmanned aerial vehicle 21. For example, a spraying area corresponding to the nozzle 43 in the spraying range is a circular area 63, a spraying area corresponding to the nozzle 42 in the spraying range is a circular area 62, a spraying area corresponding to the nozzle 45 in the spraying range is a circular area 65, and a spraying area corresponding to the nozzle 44 in the spraying range is a circular area 64. In addition, each of the circular area 63, the circular area 62, the circular area 65, and the circular area 64 includes a plurality of grid areas.

It may be understood that FIG. 2 to FIG. 6 show several examples of determining the spraying area of each nozzle in the target area, and the present application is not specifically limited in this embodiment. Other existing methods for determining a spraying area of each nozzle in the target area or methods that may occur in the future may all be applied to this embodiment.

Step S103: determining whether there are crops in the spraying area corresponding to each nozzle.

After determining the spraying area corresponding to each nozzle of the unmanned aerial vehicle 21 based on the foregoing several feasible methods, the control device for the unmanned aerial vehicle 21 needs to further determine whether there are crops in the spraying area corresponding to each nozzle. Taking FIG. 5 as an example, the control device needs to determine whether there are crops in the spraying area 412, the spraying area 413, the spraying area 414, and the spraying area 415.

Step S104: controlling the nozzle to be ON when it is determined that there are crops in the spraying area of the nozzle, otherwise controlling the nozzle to be OFF.

For example, when the control device for the unmanned aerial vehicle 21 determines that there are crops in the spraying area 412, the spraying area 413, and the spraying area 415 but there are no crops in the spraying area 414, the control device may control the nozzle 42, the nozzle 43, and the nozzle 45 to be ON, and control the nozzle 44 to be OFF.

Optionally, controlling the nozzle to be ON when it is determined that there are crops in the spraying area of the nozzle, otherwise controlling the nozzle to be OFF includes: When it is determined that there are crops in the spraying area of the nozzle, sending a control instruction to a nozzle control system of the unmanned aerial vehicle, where the control instruction is used to control the nozzle to be ON; or When it is determined that there are no crops in the spraying area of the nozzle, sending a control instruction to a nozzle control system of the unmanned aerial vehicle, where the control instruction is used to control the nozzle to be OFF.

For example, ON or OFF of the nozzle on the unmanned aerial vehicle 21 is controlled by the nozzle control system of the unmanned aerial vehicle 21. When it is determined that there are crops in the spraying area 412, the spraying area 413, and the spraying area 415, the control device for the unmanned aerial vehicle 21 sends a control instruction to the nozzle control system of the unmanned aerial vehicle 21, where the control instruction is used to control the nozzle 42, the nozzle 43, and the nozzle 45 to be ON; and after receiving the control instruction, the nozzle control system turns on the nozzle 42, the nozzle 43, and the nozzle 45. When it is determined that there are no crops in the spraying area 414, the control device for the unmanned aerial vehicle 21 sends a control instruction to the nozzle control system of the unmanned aerial vehicle 21, where the control instruction is used to control the nozzle 44 to be OFF; and after receiving the control instruction, the nozzle control system turns off the nozzle 44.

In the present embodiment, by determining the spraying area of each nozzle in the target area based on the location information of the unmanned aerial vehicle and the attitude information of the unmanned aerial vehicle and further determining whether there are crops in the spraying area corresponding to each nozzle, which nozzle corresponds to a spraying area with crops and which nozzle corresponds to a spraying area without crops can be determined; and if there are crops in the spraying area of a nozzle, the nozzle is controlled to be ON, otherwise, the nozzle is controlled to be OFF. Therefore, waste of pesticide can be effectively avoided in comparison with an operation mode of turning on all nozzles of an unmanned aerial vehicle to spray simultaneously.

An embodiment of the present invention provides a method for controlling an unmanned aerial vehicle. FIG. 7 is a flowchart of a method for controlling an unmanned aerial vehicle according to another embodiment of the present invention. As shown in FIG. 7, on a basis of the embodiment shown in FIG. 1, the determining whether there are crops in the spraying area corresponding to each nozzle includes:
Step S701: obtaining a distribution status diagram of crops in the target area, where the distribution status diagram of crops in the target area is determined based on an image captured by a surveying and mapping unmanned aerial vehicle in a process of flying in the target area.

Optionally, the distribution status diagram of crops in the target area is determined based on three-dimensional point cloud information of the target area, and the three-dimensional point cloud information of the target area is generated based on the image captured by the surveying and mapping unmanned aerial vehicle in the process of flying in the target area.

In this embodiment, before the unmanned aerial vehicle 21 such as the agricultural unmanned aerial vehicle performs the spraying task in the target area 23, the surveying and mapping unmanned aerial vehicle may fly in the target area 23. In the process of flying, the surveying and mapping unmanned aerial vehicle may shoot images in real-time, where each image may be an image of a part of the target area 23. The surveying and mapping unmanned aerial vehicle may record location information of the surveying and mapping unmanned aerial vehicle and attitude information of a gimbal of the surveying and mapping unmanned aerial vehicle when shooting each image. To be specific, for each image, there are corresponding location information of the surveying and mapping unmanned aerial vehicle and attitude information of the gimbal. Each image shot by the surveying and mapping unmanned aerial vehicle and the location information of the surveying and mapping unmanned aerial vehicle and the attitude information of the gimbal that correspond to each image may be stored in a built-in memory or an external memory of the surveying and mapping unmanned aerial vehicle. Taking a secure digital memory card (SD card) as an example of the external memory, after the surveying and mapping unmanned aerial vehicle completes a flight task, the user may remove the SD card from the surveying and mapping unmanned aerial vehicle, and insert the SD card into a computer, for example, a personal computer (PC). The computer may read each image, and the location information of the surveying and mapping unmanned aerial vehicle and the attitude information of the gimbal that correspond to each image that are stored in the SD card, and further generate, based on each image, and the location information of the surveying and mapping unmanned aerial vehicle and the attitude information of the gimbal that correspond to each image, a three-dimensional point cloud corresponding to the target area 23, where each three-dimensional point in the three-dimensional point cloud may correspond to three-dimensional coordinates and color information. Further, the computer generates the distribution status diagram of crops in the target area 23 based on the three-dimensional point cloud corresponding to the target area 23. In some embodiments, the personal computer may input the three-dimensional point cloud information to a neural network model that is well trained beforehand, where the neural network model that is well trained beforehand may perform recognition on the three-dimensional point cloud information to output the distribution status diagram of crops in the target area 23. The distribution status diagram of crops in the target area 23 may be a semantic map of the target area.

Step S702: querying, from the distribution status diagram, whether there are crops in the spraying area corresponding to each nozzle.

In this embodiment, when the unmanned aerial vehicle 21 such as the agricultural unmanned aerial vehicle performs the spraying task in the target area 23, the unmanned aerial vehicle 21 may pre-store the distribution status diagram. When the control device determines the spraying area of each nozzle of the unmanned aerial vehicle 21 in the target area 23, the control device may query, from the distribution status diagram, whether there are crops in the spraying area of each nozzle in the target area 23.

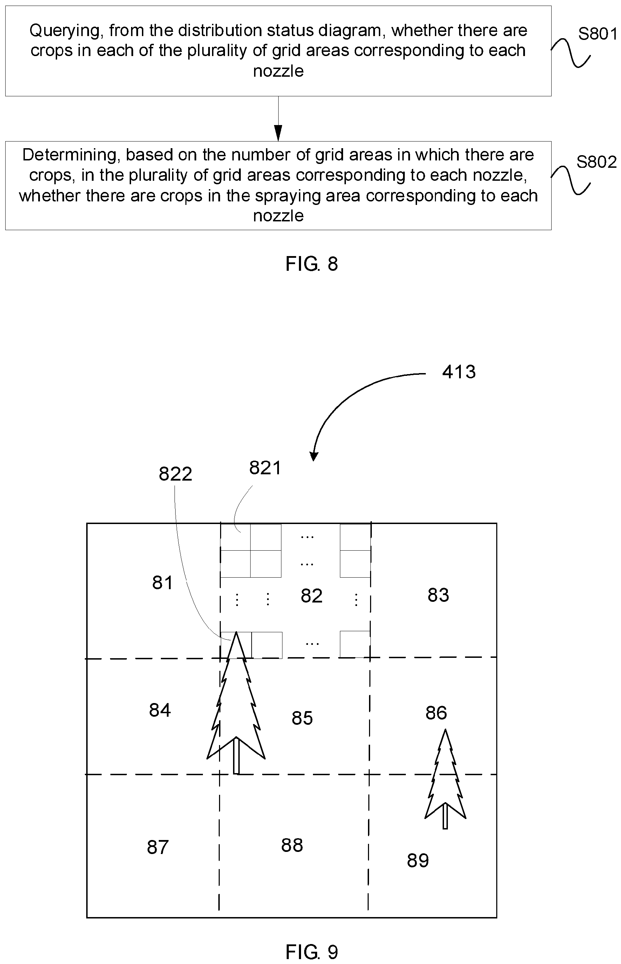

Optionally, the spraying area includes a plurality of grid areas, and the querying, from the distribution status diagram, whether there are crops in the spraying area corresponding to each nozzle includes the following steps, as shown in FIG. 8.

Step S801: querying, from the distribution status diagram, whether there are crops in each of the plurality of grid areas corresponding to each nozzle.

As shown in FIG. 3, FIG. 5, and FIG. 6, the spraying area of each nozzle in the target area 23 includes a plurality of grid areas. To determine whether there are crops in the spraying area of each nozzle in the target area 23, the control device may first query, from the distribution status diagram, whether there are crops in each of the plurality of grid areas corresponding to the spraying area of each nozzle in the target area 23. Taking FIG. 5 as an example, when the control device determines whether there are crops in the spraying area 413 corresponding to the nozzle 43, the control device may query, from the distribution status diagram, whether there are crops in each of nine grid areas corresponding to the spraying area 413.

Optionally, the distribution status diagram of crops in the target area includes location information of each unit area in the target area and identification information corresponding to each unit area, where the identification information is used to indicate whether there are crops in the unit area, and the grid area is larger than or equal to the unit area.

As described above, the computer generates the distribution status diagram of crops in the target area 23 based on the three-dimensional point cloud corresponding to the target area 23. Specifically, the computer may input the three-dimensional point cloud to the neural network model that is well trained beforehand, and the neural network model may recognize whether there are crops in each unit area in the target area 23. Optionally, the target area 23 may be an area in the three-dimensional space, and each unit area in the target area 23 is also an area in the three-dimensional space. To be specific, the target area 23 may be formed by unit areas, where the unit area may be, for example, an area of 1 cubic centimeter. Specifically, the neural network may output three-dimensional coordinates of a geometric center of each unit area and the identification information corresponding to each unit area, where the identification information is used to indicate whether there are crops in the unit area. For example, the identification information may indicate that there are objects such as fruit trees, a utility pole, a pool, or weeds in the unit area. The fruit trees are crops to be sprayed, but the utility pole, the pool, or weeds are not crops to be sprayed. Correspondingly, the distribution status diagram of the target area 23 includes the three-dimensional coordinates of the geometric center of each unit area in the target area 23 and the identification information corresponding to each unit area.

The plurality of grid areas corresponding to each nozzle as shown in FIG. 5 may also be areas in the three-dimensional space. Optionally, each grid area is larger than or equal to the unit area. For example, each grid area may be an area of 1 cubic meter. Therefore, each grid area may include a plurality of unit areas.

The querying of whether there are crops in each of the plurality of grid areas corresponding to each nozzle from the distribution status diagram includes: determining, based on the location information of each unit area included in the distribution status diagram and location information of each of the plurality of grid areas corresponding to each nozzle, unit areas covered by each of the plurality of grid areas corresponding to each nozzle; determining the number of unit areas whose identification information is target identification information, in the unit areas covered by each of the plurality of grid areas corresponding to each nozzle; and determining, based on the number, whether there are crops in each of the plurality of grid areas corresponding to each nozzle.

In this embodiment, the target area, the unit area, and the grid area may also be areas in a plane. For example, each grid area may be an area of 1 square meter, each unit area may be an area of 1 square centimeter, and each grid area may include a plurality of unit areas.

Taking the spraying area 413 corresponding to the nozzle 43 as an example, the spraying area 413 includes nine grid areas, which are a grid area 81 to a grid area 89 in sequence, as shown in FIG. 9. When the control device for the unmanned aerial vehicle 21 queries, from the distribution status diagram, whether there are crops in each of the nine grid areas corresponding to the nozzle 43, the control device may determine, based on the location information of each unit area included in the distribution status diagram and location information of each of the nine grid areas, unit areas covered by each of the nine grid areas. As shown in FIG. 9, the grid area 82 covers a plurality of unit areas, where 821 indicates any one of the plurality of unit areas. Each of the plurality of unit areas covered by the grid area 82 corresponds to one piece of identification information, where the identification information may be used to indicate whether there are crops in the unit area. Herein, identification information used to indicate that there are crops in a unit area may be marked as target identification information. Therefore, the number of unit areas whose identification information is target identification information, in the plurality of unit areas covered by the grid area 82 may be counted, that is, the number of unit areas having crops, in the plurality of unit areas covered by the grid area 82 is counted. As shown in FIG. 9, it is assumed that only identification information corresponding to a unit area 822 in the plurality of unit areas covered by the grid area 82 is the target identification information, that is, in the plurality of unit areas covered by the grid area 82, the number of unit areas whose corresponding identification information is the target identification information is 1. That is, in the plurality of unit areas covered by the grid area 82, the number of unit areas having crops is 1. Likewise, in a plurality of unit areas covered by each of the grid area 81 and the grid area 83 to the grid area 89, the number of unit areas having crops may be counted. Further, based on the number of unit areas having crops, in the plurality of unit areas covered by each of the grid area 81 to the grid area 89, whether there are crops in each of the nine grid areas is determined.

Optionally, the determining of whether there are crops in each of the plurality of grid areas corresponding to each nozzle based on the number includes: in the unit areas covered by the grid area, if the number of unit areas whose identification information is target identification information is greater than or equal to 1, determining that there are crops in the grid area, otherwise determining that there are no crops in the grid area.

As shown in FIG. 9, in the plurality of unit areas covered by the grid area 82, the number of unit areas whose corresponding identification information is the target identification information is 1, and it may be determined that there are crops in the grid area 82. For another example, in a plurality of unit areas covered by the grid area 83, the number of unit areas whose corresponding identification information is the target identification information is 0, and it is determined that there are no crops in the grid area 83.

In other embodiments, in the plurality of unit areas covered by each grid area, only when the number of unit areas whose corresponding identification information is the target identification information is greater than or equal to a preset value, it can be considered that there are crops in the grid area. The preset value may be a positive integer greater than 1, or may be a percentage. For example, if the grid area 82 covers 100 unit areas, it is considered that there are crops in the grid area 82 only when identification information of 10% or more of the 100 unit areas is the target identification information. Herein, 10% is only an example, and other values may also be used.

Step S802: determining, based on the number of grid areas having crops, in the plurality of grid areas corresponding to each nozzle, whether there are crops in the spraying area corresponding to each nozzle.

By using the foregoing method, in the nine grid areas in the spraying area 413 corresponding to the nozzle 43, which grid area has crops and which grid area has no crops can be determined, and therefore the number of grid areas having crops, in the nine grid areas, can be determined. As shown in FIG. 9, it is assumed that there are crops in the grid area 82, the grid area 84, the grid area 85, the grid area 86, and the grid area 89, that is, in the nine grid areas, the number of grid areas having crops is 5.

Likewise, in a plurality of grid areas in a spraying area corresponding to each of the other nozzles of the unmanned aerial vehicle, such as the nozzle 42, the nozzle 44, and the nozzle 45 shown in FIG. 5, the number of grid areas having crops may be determined.

Optionally, the determining, based on the number of grid areas having crops, in the plurality of grid areas corresponding to each nozzle, whether there are crops in the spraying area corresponding to each nozzle includes: if the number of grid areas having crops, in the plurality of grid areas corresponding to the nozzle, is greater than or equal to 1, determining that there are crops in the spraying area corresponding to the nozzle, otherwise determining that there are no crops in the spraying area corresponding to the nozzle.

For example, after determining the number of grid areas having crops, in the plurality of grid areas in the spraying area corresponding to each nozzle of the unmanned aerial vehicle, the control device for the unmanned aerial vehicle may determine, based on the number of grid areas having crops, in the plurality of grid areas in the spraying area corresponding to each nozzle, whether there are crops in the spraying area corresponding to each nozzle. Optionally, when the number of grid areas having crops, in the plurality of grid areas in the spraying area corresponding to the nozzle is greater than or equal to 1, it is determined that there are crops in the spraying area corresponding to the nozzle, otherwise, it is determined that there are no crops in the spraying area corresponding to the nozzle. As shown in FIG. 9, if the number of grid areas having crops in the nine grid areas in the spraying area 413 corresponding to the nozzle 43 is 5, where 5 is greater than or equal to 1, it is determined that there are crops in the spraying area 413 corresponding to the nozzle 43. Likewise, it may be determined that there are crops in the spraying area 412 corresponding to the nozzle 42, and that there are crops in the spraying area 415 corresponding to the nozzle 45, and that there are no crops in the spraying area 414 corresponding to the nozzle 44. Therefore, the unmanned aerial vehicle can control the nozzle 43, the nozzle 42, and the nozzle 45 to be ON, and control the nozzle 44 to be OFF.

In this embodiment, before the agricultural unmanned aerial vehicle performs the spraying task in the target area, the surveying and mapping unmanned aerial vehicle performs photographing on the target area, to obtain a plurality of images corresponding to the target area, location information of the surveying and mapping unmanned aerial vehicle and attitude information of the gimbal corresponding to each image, and may determine the distribution status diagram of crops in the target area based on each image, and the location information of the surveying and mapping unmanned aerial vehicle and the attitude information of the gimbal corresponding to each image. When the agricultural unmanned aerial vehicle performs the spraying task in the target area, the agricultural unmanned aerial vehicle may query, from the distribution status diagram, whether there are crops in the spraying area corresponding to each nozzle. This improves the accuracy of determining whether there are crops in the spraying area corresponding to each nozzle, further improves the accuracy of controlling the nozzle, and therefore avoids waste of pesticide more effectively.

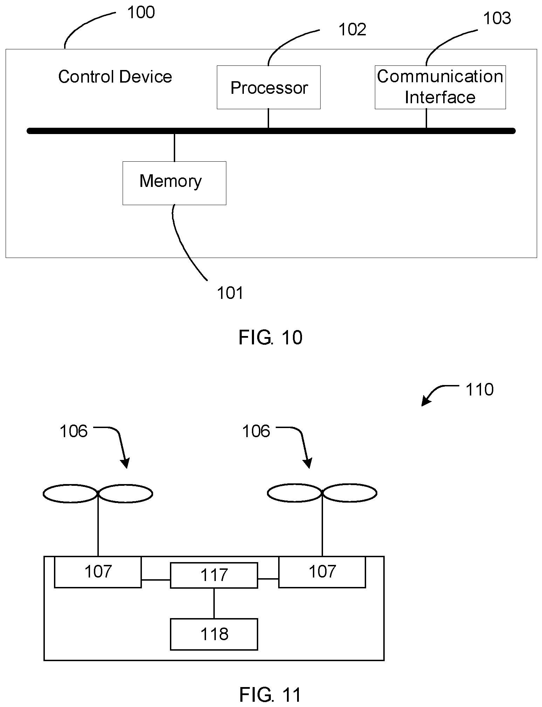

An embodiment of the present invention provides a control device for an unmanned aerial vehicle. FIG. 10 is a structural diagram of a control device for an unmanned aerial vehicle according to an embodiment of the present invention. In this embodiment, a plurality of nozzles are disposed on the unmanned aerial vehicle, and the nozzles are configured to perform a spraying task on crops in a target area. As shown in FIG. 10, the control device 100 includes a memory 101 and a processor 102. The memory 101 is configured to store program code. The processor 102 is configured to invoke the program code, and configured to perform the following operations when the program code is executed: obtaining location information and attitude information of the unmanned aerial vehicle; determining a spraying area of each nozzle in the target area based on the location information of the unmanned aerial vehicle and the attitude information of the unmanned aerial vehicle; determining whether there are crops in the spraying area corresponding to each nozzle; and When it is determined that there are crops in the spraying area of the nozzle, controlling the nozzle to be ON, otherwise controlling the nozzle to be OFF.

Optionally, when determining the spraying area of each nozzle in the target area based on the location information of the unmanned aerial vehicle and the attitude information of the unmanned aerial vehicle, the processor 102 is specifically configured to: determine location information of each nozzle based on the location information of the unmanned aerial vehicle and the attitude information of the unmanned aerial vehicle; and determine the spraying area of each nozzle in the target area based on the location information of each nozzle and a spraying width of each nozzle.

Optionally, when determining the spraying area of each nozzle in the target area based on the location information of the unmanned aerial vehicle and the attitude information of the unmanned aerial vehicle, the processor 102 is specifically configured to: determine a spraying range of the unmanned aerial vehicle in the target area based on the location information of the unmanned aerial vehicle and a spraying width of the unmanned aerial vehicle; and determine, from the spraying range of the unmanned aerial vehicle in the target area, the spraying area of each nozzle in the target area based on the attitude information of the unmanned aerial vehicle.

Optionally, when determining whether there are crops in the spraying area corresponding to each nozzle, the processor 102 is specifically configured to: obtain a distribution status diagram of crops in the target area, where the distribution status diagram of crops in the target area is determined based on an image captured by a surveying and mapping unmanned aerial vehicle in a process of flying in the target area; and query, from the distribution status diagram, whether there are crops in the spraying area corresponding to each nozzle.

Optionally, the distribution status diagram of crops in the target area is determined based on three-dimensional point cloud information of the target area, and the three-dimensional point cloud information of the target area is generated based on the image captured by the surveying and mapping unmanned aerial vehicle in the process of flying in the target area.

Optionally, the spraying area includes a plurality of grid areas, and when querying, from the distribution status diagram, whether there are crops in the spraying area corresponding to each nozzle, the processor 102 is specifically configured to: query, from the distribution status diagram, whether there are crops in each of the plurality of grid areas corresponding to each nozzle; and determine, based on the number of grid areas having crops, in the plurality of grid areas corresponding to each nozzle, whether there are crops in the spraying area corresponding to each nozzle.

Optionally, when determining, based on the number of grid areas having crops, in the plurality of grid areas corresponding to each nozzle, whether there are crops in the spraying area corresponding to each nozzle, the processor 102 is specifically configured to: if the number of grid areas having crops, in the plurality of grid areas corresponding to the nozzle is greater than or equal to 1, determine that there are crops in the spraying area corresponding to the nozzle, otherwise determine that there are no crops in the spraying area corresponding to the nozzle.

Optionally, the distribution status diagram of crops in the target area includes location information of each unit area in the target area and identification information corresponding to each unit area, where the identification information is used to indicate whether there are crops in the unit area, and the grid area is larger than or equal to the unit area; and when querying, from the distribution status diagram, whether there are crops in each of the plurality of grid areas corresponding to each nozzle, the processor 102 is specifically configured to: determine, based on the location information of each unit area included in the distribution status diagram and location information of each of the plurality of grid areas corresponding to each nozzle, unit areas covered by each of the plurality of grid areas corresponding to each nozzle; determine the number of unit areas whose identification information is target identification information, in the unit areas covered by each of the plurality of grid areas corresponding to each nozzle; and determine, based on the number, whether there are crops in each of the plurality of grid areas corresponding to each nozzle.

Optionally, when determining, based on the number, whether there are crops in each of the plurality of grid areas corresponding to each nozzle, the processor 102 is specifically configured to: if the number of unit areas whose identification information is target identification information, in the unit areas covered by the grid area is greater than or equal to 1, determine that there are crops in the grid area, otherwise determine that there are no crops in the grid area.

Optionally, the control device further includes a communication interface 103. When the nozzle is controlled to be ON upon determining that there are crops in the spraying area of the nozzle, otherwise the nozzle is controlled to be OFF, the processor 102 is specifically configured to: when the processor 102 determines that there are crops in the spraying area of the nozzle, send a control instruction to a nozzle control system of the unmanned aerial vehicle by using the communication interface 103, where the control instruction is used to control the nozzle to be ON; or when the processor 102 determines that there are no crops in the spraying area of the nozzle, send a control instruction to a nozzle control system of the unmanned aerial vehicle by using the communication interface, where the control instruction is used to control the nozzle to be OFF.

Specific principles and implementations of the control device provided in this embodiment of the present invention are similar to those in the foregoing embodiment. Details are not described again herein.

In this embodiment, by determining the spraying area of each nozzle in the target area based on the location information of the unmanned aerial vehicle and the attitude information of the unmanned aerial vehicle and further determining whether there are crops in the spraying area corresponding to each nozzle, which nozzle corresponds to a spraying area with crops and which nozzle corresponds to a spraying area without crops can be determined; and if there are crops in the spraying area of a nozzle, the nozzle is controlled to be ON, otherwise, the nozzle is controlled to be OFF. Therefore, waste of pesticide can be effectively avoided in comparison with an operation mode of turning on all nozzles of an unmanned aerial vehicle to spray simultaneously.

An embodiment of the present invention provides a spraying system of an unmanned aerial vehicle. The unmanned aerial vehicle performs a spraying task on crops in a target area. The spraying system of the unmanned aerial vehicle includes: a plurality of nozzles, a nozzle control system, and the control device in the foregoing embodiment, where the plurality of nozzles are mounted on a fuselage of the unmanned aerial vehicle; and the nozzle control system is configured to control the plurality of nozzles to be ON or OFF. Specific principles and implementations of the control device are similar to those in the foregoing embodiment. Details are not described again herein.

An embodiment of the present invention provides an unmanned aerial vehicle. FIG. 11 is a structural diagram of an unmanned aerial vehicle according to an embodiment of the present invention. As shown in FIG. 11, the unmanned aerial vehicle 110 includes a fuselage, a power system, and a flight controller 118. The power system includes at least one of the following: a motor 107, a propeller 106, and an electronic speed governor 117. The power system is mounted in the fuselage, and configured to supply power for flying. The flight controller 118 is communicatively connected to the power system, and is configured to control the flight of the unmanned aerial vehicle. In addition, the unmanned aerial vehicle 110 may further include the foregoing spraying system of the unmanned aerial vehicle. Specific principles and implementations of the spraying system of the unmanned aerial vehicle are similar to those in the foregoing embodiment. Details are not described again herein.

Optionally, the unmanned aerial vehicle 110 is an agricultural unmanned aerial vehicle.

In this embodiment, by determining the spraying area of each nozzle in the target area based on the location information of the unmanned aerial vehicle and the attitude information of the unmanned aerial vehicle and further determining whether there are crops in the spraying area corresponding to each nozzle, which nozzle corresponds to a spraying area with crops and which nozzle corresponds to a spraying area without crops can be determined; and if there are crops in the spraying area of a nozzle, the nozzle is controlled to be ON, otherwise, the nozzle is controlled to be OFF. Therefore, waste of pesticide can be effectively avoided in comparison with an operation mode of turning on all nozzles of an unmanned aerial vehicle to spray simultaneously.

In addition, this embodiment further provides a computer-readable storage medium, where the computer-readable storage medium stores a computer program thereon, and the computer program is executed by a processor to implement the method for controlling an unmanned aerial vehicle in the foregoing embodiment.

In the several embodiments provided in the present invention, it should be understood that the disclosed apparatus and method may be implemented in other manners. For example, the described apparatus embodiment is merely an example. For example, the unit division is merely logical function division and may be other division in actual implementation. For example, a plurality of units or components may be combined or integrated into another system, or some features may be ignored or may not be performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network elements. Some or all of the units may be selected based on actual requirements to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware or may be implemented in a form of hardware in addition to a software functional unit.

When the foregoing integrated unit is implemented in a form of a software functional unit, the integrated unit may be stored in a computer-readable storage medium. The software functional unit is stored in a storage medium and includes several instructions for instructing a computer device (which may be a personal computer, a server, a network device, or the like) or a processor to perform a part of the steps of the methods described in the embodiments of the present invention. The foregoing storage medium includes: any medium that can store program code, such as a USB flash drive, a removable hard disk, a read-only memory (ROM), a random-access memory (RAM), a magnetic disk, or an optical disc.

It may be clearly understood by persons skilled in the art that, for the purpose of convenient and brief description, division of the foregoing functional modules is used as an example for illustration. In actual application, the foregoing functions can be allocated to different functional modules and implemented according to a requirement, that is, an internal structure of the apparatus is divided into different functional modules to implement all or a part of the functions described above. For a detailed working process of the foregoing apparatus, reference may be made to a corresponding process in the foregoing method embodiments, and details are not described again herein.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present invention.

## Claims

1. A method for controlling an unmanned aerial vehicle, **characterized in that** a plurality of nozzles are disposed on the unmanned aerial vehicle, the nozzles are configured to perform a spraying task on crops in a target area, the method comprising:
obtaining location information and attitude information of the unmanned aerial vehicle;
determining a spraying area for each nozzle in the target area based on the location information of the unmanned aerial vehicle and the attitude information of the unmanned aerial vehicle;
determining whether there are crops in the spraying area corresponding to each nozzle;
upon determining that there are crops in the spraying area of the nozzle, controlling the nozzle to be ON, otherwise, controlling the nozzle to be OFF.

2. The method according to claim 1, **characterized in that**, the determining of the spraying area of each nozzle in the target area based on the location information of the unmanned aerial vehicle and the attitude information of the unmanned aerial vehicle includes:
determining location information of each nozzle based on the location information of the unmanned aerial vehicle and the attitude information of the unmanned aerial vehicle;
determining the spraying area of each nozzle in the target area based on the location information of each nozzle and a spraying width of each nozzle.

3. The method according to claim 1, **characterized in that**, the determining of the spraying area of each nozzle in the target area based on the location information of the unmanned aerial vehicle and the attitude information of the unmanned aerial vehicle includes:
determining a spraying range of the unmanned aerial vehicle in the target area based on the location information of the unmanned aerial vehicle and a spraying width of the unmanned aerial vehicle;
determining, from the spraying range of the unmanned aerial vehicle in the target area, the spraying area of each nozzle in the target area based on the attitude information of the unmanned aerial vehicle.

4. The method according to any one of claims 1 to 3, **characterized in that** the determining of whether there are crops in the spraying area corresponding to each nozzle includes:
obtaining a distribution status diagram of crops in the target area, wherein the distribution status diagram of crops in the target area is determined based on an image captured by a surveying and mapping unmanned aerial vehicle in a process of flying in the target area;
querying whether there are crops in the spraying area corresponding to each nozzle from the distribution status diagram.

5. The method according to claim 4, **characterized in that** the distribution status diagram of crops in the target area is determined based on three-dimensional point cloud information of the target area, and the three-dimensional point cloud information of the target area is generated based on the image captured by the surveying and mapping unmanned aerial vehicle in the process of flying in the target area.

6. The method according to claim 4 or 5, **characterized in that** the spraying area includes a plurality of grid areas, and the querying of whether there are crops in the spraying area corresponding to each nozzle from the distribution status diagram includes:
querying, from the distribution status diagram, whether there are crops in each of the plurality of grid areas corresponding to each nozzle;
determining whether there are crops in the spraying area corresponding to each nozzle based on the number of grid areas having crops in the plurality of grid areas corresponding to each nozzle.

7. The method according to claim 6, **characterized in that** the determining of whether there are crops in the spraying area corresponding to each nozzle in the plurality of grid areas corresponding to each nozzle based on the number of grid areas having crops includes:
if the number of grid areas having crops in the plurality of grid areas corresponding to the nozzle is greater than or equal to 1, determining that there are crops in the spraying area corresponding to the nozzle, otherwise determining that there are no crops in the spraying area corresponding to the nozzle.

8. The method according to claim 6 or 7, **characterized in that** the distribution status diagram of crops in the target area includes location information of each unit area in the target area and identification information corresponding to each unit area, wherein the identification information is used to indicate whether there are crops in the unit area, and the grid area is larger than or equal to the unit area,
the querying of whether there are crops in each of the plurality of grid areas corresponding to each nozzle from the distribution status diagram includes:
determining unit areas covered by each of the plurality of grid areas corresponding to each nozzle based on the location information of each unit area included in the distribution status diagram and location information of each of the plurality of grid areas corresponding to each nozzle;
determining the number of unit areas whose identification information is target identification information in the unit areas covered by each of the plurality of grid areas corresponding to each nozzle;
determining whether there are crops in each of the plurality of grid areas corresponding to each nozzle based on the number.

9. The method according to claim 8, **characterized in that** the determining of whether there are crops in each of the plurality of grid areas corresponding to each nozzle based on the number includes:
if the number of unit areas whose identification information is target identification information in the unit areas covered by the grid area is greater than or equal to 1, determining that there are crops in the grid area, otherwise determining that there are no crops in the grid area.

10. The method according to any one of claims 1 to 9, **characterized in that** the controlling of the nozzle to be ON upon determining that there are crops in the spraying area of the nozzle, otherwise controlling the nozzle to be OFF includes:
upon determining that there are crops in the spraying area of the nozzle, sending a control instruction to a nozzle control system of the unmanned aerial vehicle, wherein the control instruction is used for controlling the nozzle to be ON;
upon determining that there are no crops in the spraying area of the nozzle, sending a control instruction to a nozzle control system of the unmanned aerial vehicle, wherein the control instruction is used for controlling the nozzle to be OFF.

11. A device for controlling an unmanned aerial vehicle, **characterized in that** a plurality of nozzles are disposed on the unmanned aerial vehicle, the nozzles are configured to perform a spraying task on crops in a target area, and the control device comprises a memory and a processor, wherein
the memory is configured to store program code,
the processor is configured to invoke the program code and perform the following operations when the program code is executed:
obtaining location information and attitude information of the unmanned aerial vehicle,
determining a spraying area of each nozzle in the target area based on the location information of the unmanned aerial vehicle and the attitude information of the unmanned aerial vehicle,
determining whether there are crops in the spraying area corresponding to each nozzle,
upon determining that there are crops in the spraying area of the nozzle, controlling the nozzle to be ON, otherwise controlling the nozzle to be OFF.

12. The device according to claim 11, **characterized in that** when determining the spraying area of each nozzle in the target area based on the location information of the unmanned aerial vehicle and the attitude information of the unmanned aerial vehicle, the processor is specifically configured to:
determine location information of each nozzle based on the location information of the unmanned aerial vehicle and the attitude information of the unmanned aerial vehicle;
determine the spraying area of each nozzle in the target area based on the location information of each nozzle and a spraying width of each nozzle.

13. The device according to claim 11, **characterized in that** when determining the spraying area of each nozzle in the target area based on the location information of the unmanned aerial vehicle and the attitude information of the unmanned aerial vehicle, the processor is specifically configured to:
determine a spraying range of the unmanned aerial vehicle in the target area based on the location information of the unmanned aerial vehicle and a spraying width of the unmanned aerial vehicle;
determine, from the spraying range of the unmanned aerial vehicle in the target area, the spraying area of each nozzle in the target area based on the attitude information of the unmanned aerial vehicle.

14. The device according to any one of claims 11 to 13, **characterized in that** when determining whether there are crops in the spraying area corresponding to each nozzle, the processor is specifically configured to:
obtain a distribution status diagram of crops in the target area, wherein the distribution status diagram of crops in the target area is determined based on an image captured by a surveying and mapping unmanned aerial vehicle in a process of flying in the target area;
query, from the distribution status diagram, whether there are crops in the spraying area corresponding to each nozzle.

15. The device according to claim 14, **characterized in that** the distribution status diagram of crops in the target area is determined based on three-dimensional point cloud information of the target area, and the three-dimensional point cloud information of the target area is generated based on the image captured by the surveying and mapping unmanned aerial vehicle in the process of flying in the target area.

16. The device according to claim 14 or 15, **characterized in that** the spraying area includes a plurality of grid areas, and when querying, from the distribution status diagram, whether there are crops in the spraying area corresponding to each nozzle, the processor is specifically configured to:
query, from the distribution status diagram, whether there are crops in each of the plurality of grid areas corresponding to each nozzle;
determine, based on the number of grid areas having crops, in the plurality of grid areas corresponding to each nozzle, whether there are crops in the spraying area corresponding to each nozzle.

17. The device according to claim 16, **characterized in that** when determining, based on the number of grid areas having crops, in the plurality of grid areas corresponding to each nozzle, whether there are crops in the spraying area corresponding to each nozzle, the processor is specifically configured to:
if the number of grid areas having crops in the plurality of grid areas corresponding to the nozzle is greater than or equal to 1, determine that there are crops in the spraying area corresponding to the nozzle, otherwise determine that there are no crops in the spraying area corresponding to the nozzle.

18. The device according to claim 16 or 17, **characterized in that** the distribution status diagram of crops in the target area includes location information of each unit area in the target area and identification information corresponding to each unit area, wherein the identification information is used to indicate whether there are crops in the unit area, and the grid area is larger than or equal to the unit area,
when querying, from the distribution status diagram, whether there are crops in each of the plurality of grid areas corresponding to each nozzle, the processor is specifically configured to:
determine, based on the location information of each unit area comprised in the distribution status diagram and location information of each of the plurality of grid areas corresponding to each nozzle, unit areas covered by each of the plurality of grid areas corresponding to each nozzle,
determine the number of unit areas whose identification information is target identification information in the unit areas covered by each of the plurality of grid areas corresponding to each nozzle,
determine, based on the number, whether there are crops in each of the plurality of grid areas corresponding to each nozzle.

19. The device according to claim 18, **characterized in that** when determining, based on the number, whether there are crops in each of the plurality of grid areas corresponding to each nozzle, the processor is specifically configured to:
if the number of unit areas whose identification information is target identification information in the unit areas covered by the grid area is greater than or equal to 1, determine that there are crops in the grid area, otherwise determine that there are no crops in the grid area.

20. The device according to any one of claims 11 to 19, **characterized in that** the control device further comprises a communication interface,
when controlling the nozzle to be ON upon determining that there are crops in the spraying area of the nozzle, otherwise controlling the nozzle to be OFF, the processor is specifically configured to:
when the processor determines that there are crops in the spraying area of the nozzle, send a control instruction to a nozzle control system of the unmanned aerial vehicle by using the communication interface, wherein the control instruction is used for controlling the nozzle to be ON;
when the processor determines that there are no crops in the spraying area of the nozzle, send a control instruction to a nozzle control system of the unmanned aerial vehicle by using the communication interface, wherein the control instruction is used for controlling the nozzle to be OFF.

21. A spraying system of an unmanned aerial vehicle, **characterized in that** the unmanned aerial vehicle performs a spraying task on crops in a target area, and the spraying system of the unmanned aerial vehicle comprises:
a plurality of nozzles, mounted on a fuselage of the unmanned aerial vehicle;
a nozzle control system, configured to control the plurality of nozzles to be ON or OFF; and
the control device according to any one of claims 11 to 20.

22. An unmanned aerial vehicle, **characterized in that**, comprising:
a fuselage;
a power system, mounted in the fuselage and configured to supply power for flying; and
the spraying system of the unmanned aerial vehicle according to claim 21.

23. The unmanned aerial vehicle according to claim 22, **characterized in that** the unmanned aerial vehicle is an agricultural unmanned aerial vehicle.

24. A computer-readable storage medium, **characterized in that** the computer-readable storage medium stores a computer program, and the computer program is executed by a processor to implement the method according to any one of claims 1 to 10.
